# EUROPEAN PATENT APPLICATION

(11) **EP 4 524 883 A1**
(43) Date of publication of application: **19.03.2025**
(21) Application number: 23803337.7
(22) Date of filing: 14.04.2023
(51) Int. Cl.: G06T 7/00

(54) **INFORMATION PROCESSING DEVICE, INFORMATION PROCESSING METHOD, AND INFORMATION GENERATION METHOD**

(30) Priority: 12.05.2022 JP 2022078898
(71) Applicant: Sony Semiconductor Solutions Corporation, Atsugi-shi, Kanagawa 243-0014 (JP)
(72) Inventor: ONO, Hiroaki, Atsugi-shi, Kanagawa 243-0014 (JP); YOSHIDA, Takahiko, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/015113
(87) International publication number: WO 2023/218855

(57) **Abstract**

An information processing apparatus according to an aspect of the present disclosure includes: a three-dimensional point cloud recognition unit that executes recognition processing on a three-dimensional point cloud and gives a recognition result for each point of the three-dimensional point cloud; and a recognition confidence calculation unit that calculates a confidence of the recognition result for each point of the three-dimensional point cloud and gives the confidence for each point of the three-dimensional point cloud.

## Description

### Field

The present disclosure relates to an information processing apparatus, an information processing method, and an information generation method.

### Background

Currently, regarding 3D recognition such as in automatic driving, robots, and augmented reality (AR), there is an apparatus that performs recognition processing on a 3D point cloud (three-dimensional point cloud) (See, for example, Patent Literature 1). In such a technology, in a case where it is desired to change the detection intensity of a recognition target, the detection intensity can be changed by performing the recognition processing again on the 3D point cloud after changing the detection intensity.

### Citation List

### Patent Literature

Patent Literature 1: JP 2019-185347 A

### Summary

### Technical Problem

However, in general, recognition processing on 3D data (three-dimensional data) often has a high processing cost, and for example, in a case where it is desired to change the detection intensity of the recognition target, the processing cost increases because the recognition processing is needed each time.

Therefore, the present disclosure proposes an information processing apparatus, an information processing method, and an information generation method capable of reducing the processing cost. Solution to Problem

An information processing apparatus according to an aspect of the present disclosure includes: a three-dimensional point cloud recognition unit that executes recognition processing on a three-dimensional point cloud and gives a recognition result for each point of the three-dimensional point cloud; and a recognition confidence calculation unit that calculates a confidence of the recognition result for each point of the three-dimensional point cloud and gives the confidence for each point of the three-dimensional point cloud.

An information processing method according to an aspect of the present disclosure includes: executing recognition processing on a three-dimensional point cloud and giving a recognition result for each point of the three-dimensional point cloud; and calculating a confidence of the recognition result for each point of the three-dimensional point cloud and giving the confidence for each point of the three-dimensional point cloud.

An information generation method according to an aspect of the present disclosure includes: generating information including position information for each point of a three-dimensional point cloud, a recognition result for each point of the three-dimensional point cloud, and a confidence of the recognition result for each point of the three-dimensional point cloud.

### Brief Description of Drawings

FIG. 1 is a diagram illustrating an example of a schematic configuration of an information processing system according to a first embodiment.
FIG. 2 is a diagram illustrating an example of a schematic configuration of an information processing apparatus according to the first embodiment.
FIG. 3 is a diagram for describing a first calculation example of a confidence of a recognition result of a 3D point cloud according to the first embodiment.
FIG. 4 is a diagram for describing a second calculation example of the confidence of the recognition result of the 3D point cloud according to the first embodiment.
FIG. 5 is a diagram for describing a first specific example of a data format of the 3D point cloud according to the first embodiment.
FIG. 6 is a diagram for describing a second specific example of the data format of the 3D point cloud according to the first embodiment.
FIG. 7 is a flowchart illustrating an example of flow of information processing according to the first embodiment.
FIG. 8 is a diagram for describing recognition label giving for each 3D point cloud according to the first embodiment.
FIG. 9 is a diagram for describing an example of flow of information processing performed by the information processing apparatus according to the first embodiment.
FIG. 10 is a diagram for describing an example of flow of information processing performed by an information processing apparatus of a comparative example according to the first embodiment.
FIG. 11 is a diagram illustrating an example of a schematic configuration of an information processing apparatus according to a second embodiment.
FIG. 12 is a diagram for describing integration of a plurality of 2D recognition results corresponding to a point of a 3D point cloud according to the second embodiment.
FIG. 13 is a flowchart illustrating an example of flow of information processing according to the second embodiment.
FIG. 14 is a diagram for describing recognition label giving for each 3D point cloud according to the second embodiment.
FIG. 15 is a diagram for describing a first specific example of a series of data formats of a 3D point cloud according to each embodiment.
FIG. 16 is a diagram for describing a second specific example of the series of data formats of the 3D point cloud according to each embodiment.
FIG. 17 is a diagram for describing a third specific example of the series of data formats of the 3D point cloud according to each embodiment.
FIG. 18 is a diagram for describing a fourth specific example of the series of data formats of the 3D point cloud according to each embodiment.
FIG. 19 is a diagram for describing a first specific example of a graphic user interface (GUI) according to each embodiment.
FIG. 20 is a diagram for describing a second specific example of the GUI according to each embodiment.
FIG. 21 is a diagram illustrating an example of a schematic configuration of a first modification of the information processing apparatus according to each embodiment.
FIG. 22 is a diagram illustrating an example of a schematic configuration of a second modification of the information processing apparatus according to each embodiment.
FIG. 23 is a diagram illustrating an example of a schematic configuration of hardware according to each embodiment.

### Description of Embodiments

Hereinafter, embodiments of the present disclosure will be described in detail with reference to the drawings. Note that the apparatus, the system, the method, and the like according to the present disclosure are not limited by the embodiment. In addition, in each of the following embodiments, the same parts are basically denoted by the same reference numerals, and redundant description will be omitted.

One or more embodiments (including examples and modifications) described below can each be implemented independently. On the other hand, at least a part of the plurality of embodiments described below may be appropriately combined with at least some of other embodiments. The plurality of embodiments may include novel features different from each other. Therefore, the plurality of embodiments can contribute to solving different objects or problems, and can exhibit different effects.

The present disclosure will be described according to the following item order.

### 1. First embodiment

1-1. Configuration example of information processing system
1-2. Configuration example of information processing apparatus
1-3. Calculation example of confidence of 3D point cloud
1-4. Specific example of data format of 3D point cloud
1-5. Example of information processing
1-6. Difference between present embodiment and comparative example
1-7. Action and effect

### 2. Second embodiment

2-1. Configuration example of information processing apparatus
2-2. Example of information processing
2-3. Action and effect
3. Specific example of a series of data formats of 3D point cloud
4. Specific example of GUI
5. Another configuration example of information processing apparatus
6. Other embodiments
7. Configuration example of hardware
8. Appendix

### <1. First embodiment>

### <1-1. Configuration example of information processing system>

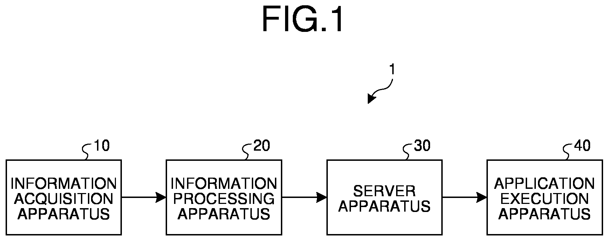

A configuration example of an information processing system 1 according to the present embodiment will be described with reference to FIG. 1. FIG. 1 is a diagram illustrating an example of a schematic configuration of the information processing system 1 according to the present embodiment.

As illustrated in FIG. 1, an information processing system 1 according to the present embodiment includes an information acquisition apparatus 10, an information processing apparatus 20, a server apparatus 30, and an application execution apparatus (application execution apparatus) 40.

The information acquisition apparatus 10 is, for example, an apparatus that acquires distance information related to a distance to a target object, image information of the target object, and the like, and transmits the acquired distance information and image information to the information processing apparatus 20. The information acquisition apparatus 10 is realized by a distance measuring device such as a stereo camera, a structured light, a direct time of flight (dToF) sensor, an indirect time of flight (iToF) sensor, and light detection and ranging or laser imaging detection and ranging (LiDAR). However, the information acquisition apparatus 10 may be a device other than the distance measuring device, and may be any device as long as information from which the information processing apparatus 20 can generate a 3D point cloud (three-dimensional point cloud) can be obtained.

The stereo camera measures the distance to the target object (information in a depth direction of the target object) by photographing the target object with the camera from a plurality of different directions. The structured light applies spot-shaped, stripe-shaped, or grid-shaped pattern light to a target object and photographs the target object with a camera at another angle. Since the photographed pattern is distorted according to the shape of the target object, information on the shape and depth direction of the object can be obtained from the distortion. The dToF sensor irradiates the target object with pulsed laser light, and measures the distance to the target object from a time difference until reflected light from the target object is detected. The iToF sensor irradiates the target object with periodic laser light (continuous wave), and measures the distance to the target object from a phase shift of reflected light from the target object. The LiDAR irradiates the target object with laser light, measures the time until the light bounces back from the target object, and acquires the distance to the target object and the shape of the target object. Examples of the LiDAR include LiDAR using a dToF method and LiDAR using an iToF method. The LiDAR includes, for example, an irradiation unit that scans and irradiates laser light, a light receiving unit that receives the laser light, and the like. In this LiDAR, distance measurement is performed at each angle in the scanning range of the laser light in the space.

The information processing apparatus 20 generates a 3D point cloud based on the distance information and the image information transmitted from the information acquisition apparatus 10, gives a recognition result (for example, a recognition label indicating the recognition result) for each point of the 3D point cloud, and calculates the confidence of the recognition result for each point. Furthermore, the information processing apparatus 20 extracts a point cloud having a confidence in a predetermined range from the 3D point cloud based on the confidence of the recognition result for each point of the 3D point cloud, and transmits point cloud information related to the point cloud having the confidence in the predetermined range to the server apparatus 30. Note that the 3D point cloud is, for example, a sample of a position and a spatial structure of the target object (object). Normally, 3D point cloud data is acquired for each frame time of a constant cycle. By performing various types of arithmetic processing on the 3D point cloud data, it is possible to detect (recognize) an accurate position, posture, and the like of the target object.

The information processing apparatus 20 is realized by a processor such as a central processing unit (CPU) or a micro processing unit (MPU), for example. For example, the information processing apparatus 20 is realized by a processor executing various programs using a random access memory (RAM) and the like as a work region. Note that the information processing apparatus 20 may be realized by an integrated circuit such as an application specific integrated circuit (ASIC) or a field programmable gate array (FPGA). Any of the CPU, the MPU, the ASIC, and the FPGA can be regarded as a controller. In addition, the information processing apparatus 20 may be realized by a graphics processing unit (GPU) in addition to or in place of the CPU. In addition, the information processing apparatus 20 may be realized by specific software instead of specific hardware.

The server apparatus 30 stores and manages various types of information. For example, the server apparatus 30 stores and manages the point cloud information transmitted from the information processing apparatus 20. The server apparatus 30 is realized by, for example, a server such as a cloud server, a PC server, a midrange server, or a mainframe server.

Here, transmission and reception of data with the server apparatus 30 are executed via, for example, a network. The network is, for example, a communication network (communication linkage) such as a local area network (LAN), a wide area network (WAN), a cellular network, a fixed telephone linkage, a regional Internet protocol (IP) linkage, or the Internet. The network may include a wired network or a wireless network. In addition, the network may include a core network. The core network is, for example, an evolved packet core (EPC) or a 5G core network (5GC). In addition, the network may include a data network other than the core network. For example, the data network may be a service network of a telecommunications carrier, for example, an IP Multimedia Subsystem (IMS) network. In addition, the data network may also be a private network, such as an intra-company network.

Note that, as a radio access technology (RAT), long term evolution (LTE), new radio (NR), Wi-Fi (registered trademark), Bluetooth (registered trademark), and the like can be used. Several types of radio access technologies may be used, for example, NR and Wi-Fi may be used, and LTE and NR may be used. LTE and NR are a type of cellular communication technology, and enable mobile communication by arranging a plurality of areas covered by a base station in a cell shape.

The application execution apparatus 40 executes the application using the point cloud information transmitted from the server apparatus 30. As the application, for example, various applications such as a general-purpose application and a dedicated application can be used.

Similarly to the information processing apparatus 20, the application execution apparatus 40 is realized by a processor such as a CPU or an MPU, for example. For example, the application execution apparatus 40 is realized by a processor executing various programs using a RAM and the like as a work region. Note that the application execution apparatus 40 may be realized by an integrated circuit such as an ASIC or an FPGA. In addition, the application execution apparatus 40 may be realized by a GPU in addition to or instead of the CPU. In addition, the application execution apparatus 40 may be realized by specific software instead of specific hardware.

Here, the application execution apparatus 40 is mounted on various apparatuses such as a car, a robot, and a user terminal. However, in addition to the application execution apparatus 40, one or both of the information acquisition apparatus 10 and the information processing apparatus 20 may be appropriately mounted on the various apparatuses. The user terminal is a terminal used by the user, and receives the point cloud information from the server apparatus 30, for example. The user terminal is realized by, for example, a terminal such as a personal computer (for example, a notebook computer or a desktop computer), a smart device (for example, a smartphone or a tablet), or a personal digital assistant (PDA). In addition, the user terminal may be realized by, for example, an xR device such as an augmented reality (AR) device, a virtual reality (VR) device, or a mixed reality (MR) device. The xR device may be a glasses-type device (for example, AR/MR/VR glasses) or a head-mounted or goggle-type device (for example, AR/MR/VR headsets, AR/MR/VR goggles). These xR devices may display a video of only one eye or may display videos of both eyes.

Note that the application execution apparatus 40 receives the point cloud information from the information processing apparatus 20 via the server apparatus 30, but is not limited to this, and for example, may directly receive the point cloud information from the information processing apparatus 20 without via the server apparatus 30. This is appropriately selected according to the configuration, use, and the like of various apparatuses on which the application execution apparatus 40 is mounted.

### <1-2. Configuration example of information processing apparatus>

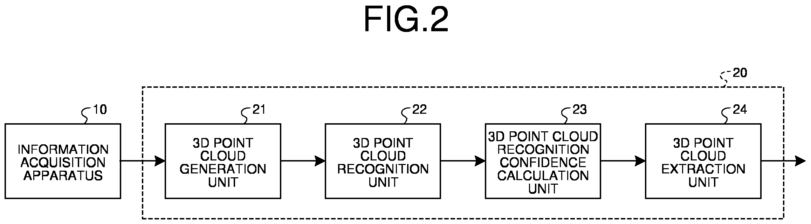

A configuration example of the information processing apparatus 20 according to the present embodiment will be described with reference to FIG. 2. FIG. 2 is a diagram illustrating an example of a schematic configuration of the information processing apparatus 20 according to the present embodiment.

As illustrated in FIG. 2, the information processing apparatus 20 includes a 3D point cloud generation unit (three-dimensional point cloud generation unit) 21, a 3D point cloud recognition unit (three-dimensional point cloud recognition unit) 22, a 3D point cloud recognition confidence calculation unit (recognition confidence calculation unit) 23, and a 3D point cloud extraction unit (three-dimensional point cloud extraction unit) 24.

The 3D point cloud generation unit 21 generates a 3D point cloud based on information such as the distance information and image information transmitted from the information acquisition apparatus 10. The 3D point cloud is a set of points having position information (for example, three-dimensional coordinates X, Y, Z).

The 3D point cloud recognition unit 22 executes recognition processing on the 3D point cloud generated by the 3D point cloud generation unit 21, and gives the recognition result for each point of the 3D point cloud. For example, the 3D point cloud recognition unit 22 executes recognition processing of recognizing an attribute of a point for each point of the 3D point cloud, and gives a recognition result (for example, a recognition label). The recognition result is a result of identifying what the target object is, and indicates, for example, a car, a person, a building, and the like. Note that the recognition processing may be executed, for example, based on a learned model by a neural network (for example, CNN: convolutional neural network, or the like) that is an example of machine learning, or may be executed based on another method.

The 3D point cloud recognition confidence calculation unit 23 calculates the confidence of the recognition result for each point of the 3D point cloud for the recognition result for each point of the 3D point cloud by the 3D point cloud recognition unit 22, and gives the confidence for each point of the 3D point cloud. The confidence indicates the likelihood of the recognition result, and is set in a range of 0.0 to 1.0, for example. For example, the higher the numerical value, the higher the confidence. As an example, if the recognition result indicates a car and its confidence is 0.3, it indicates that the probability that the target object is a car is 0.3.

The 3D point cloud extraction unit 24 extracts some point clouds from all the 3D point clouds based on the confidence of each point of the 3D point cloud obtained by the 3D point cloud recognition confidence calculation unit 23. For example, the 3D point cloud extraction unit 24 extracts a point cloud having a confidence in a predetermined range from the 3D point cloud based on the confidence of each point of the 3D point cloud. The predetermined range is set in advance by a user or the like. For example, when the predetermined range is set to 0.9 or more, a point cloud having a confidence of 0.9 or more is extracted, and when the predetermined range is set to 0.3 or more and 0.5 or less, a point cloud having a confidence of 0.3 or more and 0.5 or less is extracted.

Note that each block (for example, the 3D point cloud generation unit 21, the 3D point cloud recognition unit 22, the 3D point cloud recognition confidence calculation unit 23, and the 3D point cloud extraction unit 24) constituting the information processing apparatus 20 described above is a functional block indicating a function of the information processing apparatus 20. These functional blocks may be software blocks or hardware blocks. For example, each block may be one software module realized by software (microprograms) or one circuit block on a semiconductor chip (die). Of course, each block may be one processor or one integrated circuit. In addition, the information processing apparatus 20 may include a functional unit different from each of the above blocks. A configuration method of each block is arbitrary. In addition, a part or all of the operations of each block may be performed by another apparatus.

### <1-3. Calculation example of confidence of 3D point cloud>

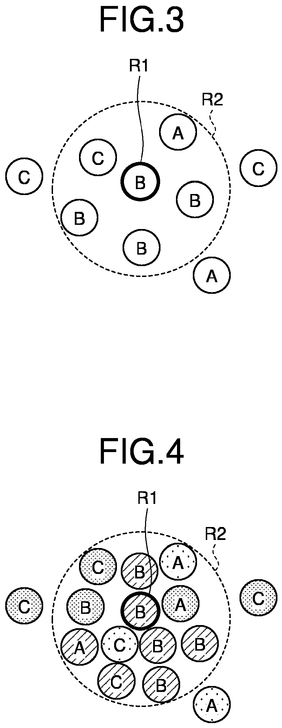

A calculation example of the confidence of the 3D point cloud according to the present embodiment will be described with reference to FIGS. 3 and 4. FIGS. 3 and 4 are diagrams for describing the calculation example of the confidence of the 3D point cloud according to the present embodiment. Note that A, B, C, and D in FIGS. 3 and 4 indicate types of recognition labels, and indicate that the recognition results are different.

As illustrated in FIG. 3, in a first calculation example, the 3D point cloud recognition confidence calculation unit 23 calculates the confidence of an attention point R1 from the recognition label of neighboring points of the attention point R1. The neighboring point is, for example, a point present in a spherical region R2 having a predetermined radius around the attention point R1. In the example of FIG. 3, there are four points B, one point A, and one point C in the spherical region R2. At this time, the number of points having the same recognition label as B of the attention point R1 is four, and the number of points in the spherical region R2 is six. In this example, the confidence of the attention point R1 is calculated as 4/6 for the recognition label B.

As illustrated in FIG. 4, in a second calculation example, the 3D point cloud recognition confidence calculation unit 23 calculates the confidence of the attention point R1 from the neighboring point and the color of the attention point R1, that is, from the recognition label of the neighborhood points of the attention point R1 while also considering the color of the points. As described above, the neighboring point is, for example, a point present in a spherical region R2 having a predetermined radius around the attention point R1. In the example of FIG. 4, in the spherical region R2, there are seven points of a color close to that of the attention point R1 (see the shaded points in FIG. 4) including the attention point R1. Among them, the number of points having the same recognition label as B of the attention point R1 is five. In this example, the confidence of the attention point R1 is calculated as 5/7 for the recognition label B.

According to the first calculation example or the second calculation example, the 3D point cloud recognition confidence calculation unit 23 can calculate the statistic of a local region based on the positional relationship and the color similarity for each point in the local region (for example, the spherical region R2) of the 3D point cloud, and calculate the confidence for each point of the 3D point cloud from the statistic. Note that the calculation examples according to FIGS. 3 and 4 are merely examples, and other confidence calculation methods can also be used. Although the spherical region R2 is used as the local region including the attention point R1, the present invention is not limited thereto, and a space region having another shape may be used.

### <1-4. Specific example of data format of 3D point cloud>

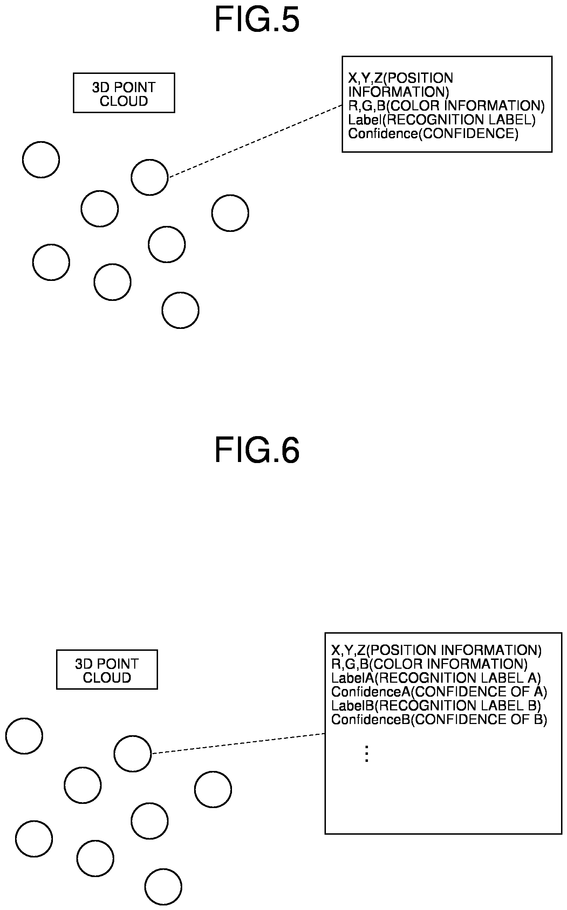

A specification example of a data format of the 3D point cloud according to the present embodiment will be described with reference to FIGS. 5 and 6. FIGS. 5 and 6 are diagrams for describing specific example of the data format of the 3D point cloud according to the present embodiment.

As illustrated in FIG. 5, in a first specific example, the 3D point cloud recognition confidence calculation unit 23 adds one recognition label and confidence corresponding thereto for each point of the 3D point cloud. In the example of FIG. 5, information of label (recognition label) and confidence is added for each point of the 3D point cloud in addition to X, Y, Z (position information) and R, G, B (color information).

As illustrated in FIG. 6, in a second specific example, the 3D point cloud recognition confidence calculation unit 23 adds a plurality of recognition labels and confidences corresponding thereto for each point of the 3D point cloud. In the example of FIG. 6, information of a plurality of labels (recognition labels) and the confidence of each label is added for each point of the 3D point cloud in addition to X, Y, Z (position information) and R, G, B (color information).

According to the first specific example or the second specific example, in addition to the position information and the color information of the 3D point cloud data, information of the recognition label and the confidence, or information of a plurality of recognition labels and the confidence thereof is added. Note that the specific examples according to FIGS. 5 and 6 are merely examples, and other data formats can also be used.

Here, the 3D point cloud recognition confidence calculation unit 23 generates data including at least the position information for each point of the 3D point cloud, the recognition label for each point of the 3D point cloud, and the confidence of the recognition label for each point of the 3D point cloud, and transmits the data to the 3D point cloud extraction unit 24. The 3D point cloud extraction unit 24 stores, for example, the data transmitted from the 3D point cloud recognition confidence calculation unit 23 in a storage unit. The storage unit may be provided in the 3D point cloud extraction unit 24 or may be provided outside the 3D point cloud extraction unit 24. The storage unit is realized by, for example, a storage apparatus capable of reading and writing data, such as a DRAM, an SRAM, a flash memory, or a hard disk.

### <1-5. Example of information processing>

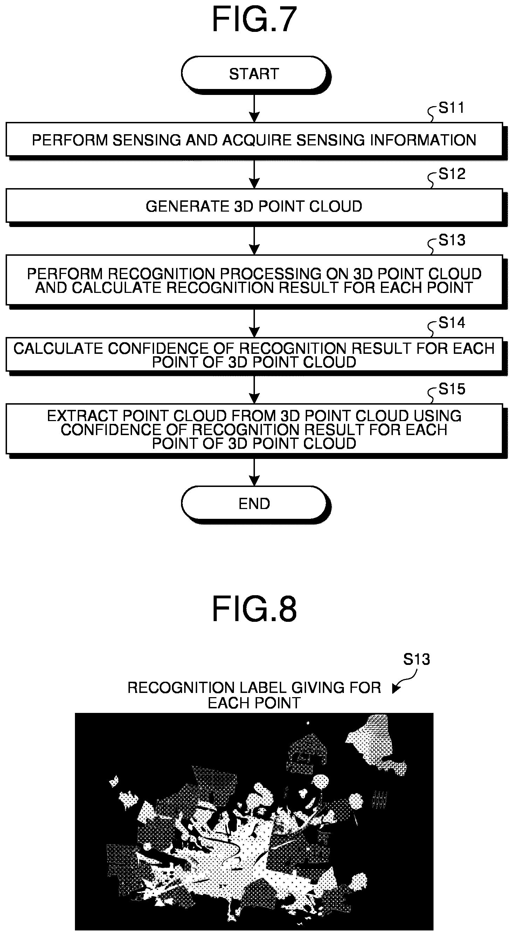

An example of the information processing according to the present embodiment will be described with reference to FIGS. 7 and 8. FIG. 7 is a flowchart illustrating an example of flow of information processing according to the present embodiment. FIG. 8 is a diagram for describing recognition label giving for each 3D point cloud according to the present embodiment.

As illustrated in FIG. 7, in step S11, the information acquisition apparatus 10 performs sensing and acquires sensing information (for example, the distance information and the like). In step S12, the 3D point cloud generation unit 21 generates a 3D point cloud based on the sensing information. In step S13, the 3D point cloud recognition unit 22 performs recognition processing on the 3D point cloud and calculates the recognition result for each point. In step S14, the 3D point cloud recognition confidence calculation unit 23 calculates the confidence of the recognition result for each point of the 3D point cloud. In step S15, the 3D point cloud extraction unit 24 extracts a point cloud from the 3D point cloud using the confidence of the recognition result for each point of the 3D point cloud. For example, the 3D point cloud extraction unit 24 extracts a point cloud having a confidence in a predetermined range from the 3D point cloud.

Here, in step S13, as illustrated in FIG. 8, the recognition processing is executed on the 3D point cloud, and the recognition result (recognition label) is calculated and given for each point of the 3D point cloud. Note that, in the example of FIG. 8, there are various filled regions such as a black solid filled region and a dot filled region, and these different filled regions indicate that the recognition results are different.

### <1-6. Difference between present embodiment and comparative example>

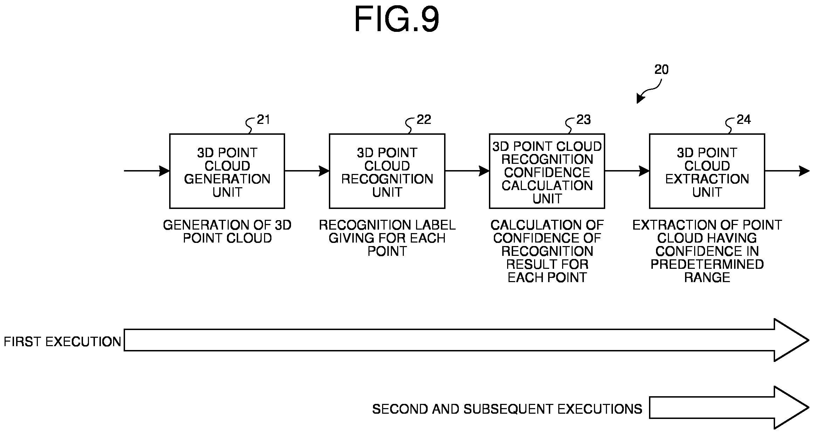

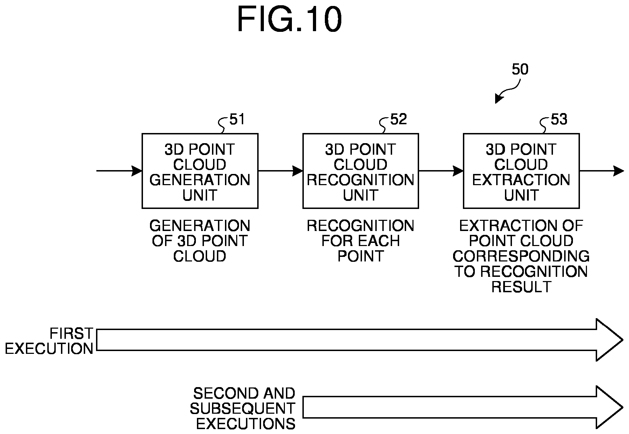

A difference according to the present embodiment between the present embodiment and a comparative example will be described with reference to FIGS. 9 and 10. FIG. 9 is a diagram for describing an example of flow of information processing performed by the information processing apparatus 20 according to the present embodiment. FIG. 10 is a diagram for describing an example of flow of information processing performed by an information processing apparatus 50 of the comparative example according to the present embodiment.

As illustrated in FIG. 9, the information processing apparatus 20 according to the present embodiment includes the 3D point cloud generation unit 21, the 3D point cloud recognition unit 22, the 3D point cloud recognition confidence calculation unit 23, and the 3D point cloud extraction unit 24 as described above. In the example of FIG. 9, in the first execution (execution of processing), desired detection intensity for detecting a recognition target is set, and generation of a 3D point cloud, recognition label giving for each point, confidence calculation of the recognition result for each point, and point cloud extraction of the confidence in a predetermined range are performed. In the second and subsequent executions, other detection intensities are set, and only point cloud extraction with the confidence in the predetermined range is performed. The detection intensity corresponds to confidence. According to such processing, by calculating the confidence in addition to the recognition processing on the 3D point cloud, even if the detection intensity is changed in the recognition processing on the 3D point cloud, the recognition result with a changed detection intensity can be obtained without re-executing the recognition processing. Therefore, the change in the detection intensity for the recognition of the 3D point cloud can be realized at low cost in the subsequent stage.

Here, the setting of the detection intensity is performed, for example, by an input operation by the user on a device (for example, a vehicle, a robot, a user terminal, or the like) on which the application execution apparatus 40 is mounted. For example, the setting of the detection intensity is changed according to a purpose such as a trial-and-error. In response to the change in the detection intensity, the 3D point cloud extraction unit 24 extracts a point cloud having a confidence in a predetermined range, for example, a point cloud having a confidence equal to or higher than the detection intensity based on the confidence of each point of the 3D point cloud calculated once. As a result, the recognition result of the 3D point cloud at an arbitrary detection intensity can be obtained at low cost.

Note that the point cloud having the confidence equal to or higher than the set detection intensity is extracted, but the invention is not limited thereto. For example, a point cloud having only the confidence corresponding to the set detection intensity may be extracted. In addition to the change in the detection intensity, for example, a detection target may be changed if the detection target (recognition target) can be selected in the configuration. In this case, in response to the change in the detection target, the 3D point cloud extraction unit 24 extracts a point cloud having a confidence in a predetermined range corresponding to the detection target in the 3D point cloud based on the confidence of each point having the recognition label corresponding to the detection target.

On the other hand, as illustrated in FIG. 10, the information processing apparatus 50 according to the comparative example includes a 3D point cloud generation unit 51, a 3D point cloud recognition unit 52, and a 3D point cloud extraction unit 53. The 3D point cloud generation unit 51 executes processing similar to that of the 3D point cloud generation unit 21 described above. The 3D point cloud recognition unit 52 executes recognition processing for each point of the 3D point cloud. The 3D point cloud extraction unit 53 executes point cloud extraction according to the recognition result. In the example of FIG. 10, in the first execution (execution of processing), desired detection intensity is set, and generation of a 3D point cloud, recognition for each point, and point cloud extraction according to the recognition result are performed. In the second and subsequent executions, other detection intensities are set, and recognition for each point, and point cloud extraction according to the recognition result are performed. According to such processing, when the detection intensity is changed in the recognition processing on the 3D point cloud, it is necessary to re-execute the recognition processing each time, and the processing cost is large.

### <1-7. Action and effect>

As described above, according to the present embodiment, the information processing apparatus 20 includes the 3D point cloud recognition unit 22 that executes the recognition processing on the 3D point cloud and gives the recognition result (for example, the recognition label) for each point of the 3D point cloud, and the 3D point cloud recognition confidence calculation unit 23 that calculates the confidence of the recognition result for each point of the 3D point cloud and gives the confidence for each point of the 3D point cloud. As a result, since the confidence is given for each point of the 3D point cloud, it is possible to extract the point cloud according to the confidence of each point of the 3D point cloud using the confidence of each point of the 3D point cloud. Therefore, for example, in a case where it is desired to change the detection intensity of the recognition processing, it is only necessary to perform the point cloud extraction according to the confidence of each point of the 3D point cloud without performing the re-execution of the recognition processing which is conventionally necessary, and the processing cost can be suppressed. In addition, a point cloud having a confidence in an arbitrary range can also be extracted.

In addition, the 3D point cloud recognition confidence calculation unit 23 may calculate the confidence for each point of the 3D point cloud from the statistic of the local region (for example, the spherical region R2) of the 3D space for the recognition result of the 3D point cloud for each point. As a result, the confidence of each point of the 3D point cloud can be accurately obtained.

In addition, the 3D point cloud recognition confidence calculation unit 23 may calculate the statistic of the local region based on the positional relationship for each point in the local region of the 3D point cloud. As a result, the confidence of each point of the 3D point cloud can be more accurately obtained.

In addition, the 3D point cloud recognition confidence calculation unit 23 may calculate the statistic of the local region based on the similarity of color for each point in the local region of the 3D point cloud. As a result, the confidence of each point of the 3D point cloud can be more accurately obtained.

In addition, the information processing apparatus 20 may further include the 3D point cloud extraction unit 24 that extracts a point cloud from the 3D point cloud based on the confidence of each point of the 3D point cloud. As a result, the point cloud can be obtained from the 3D point cloud based on the confidence of each point of the 3D point cloud.

In addition, the 3D point cloud extraction unit 24 may extract a point cloud having a confidence in a predetermined range from the 3D point cloud based on the confidence of each point of the 3D point cloud. As a result, the point cloud having the confidence in the predetermined range can be obtained from the 3D point cloud.

In addition, the 3D point cloud extraction unit 24 may store the confidence of each point of the 3D point cloud and extract a point cloud from the 3D point cloud based on the stored confidence of each point of the 3D point cloud. As a result, the point cloud can be reliably obtained from the 3D point cloud.

In addition, the information processing apparatus 20 may further include the 3D point cloud generation unit 21 that generates a 3D point cloud. As a result, the 3D point cloud can be reliably obtained.

In addition, the 3D point cloud generation unit 21 may generate a 3D point cloud from the 3D distance information. As a result, a correct 3D point cloud can be obtained.

### <2. Second embodiment>

### <2-1. Configuration example of information processing apparatus>

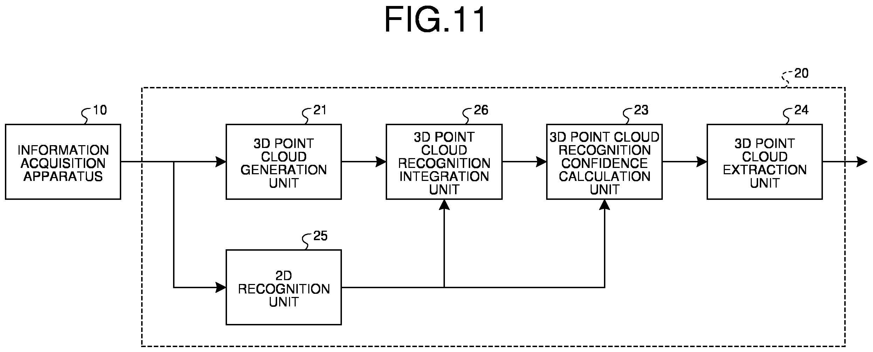

A configuration example of the information processing apparatus 20 according to the present embodiment will be described with reference to FIG. 11. FIG. 11 is a diagram illustrating an example of a schematic configuration of the information processing apparatus 20 according to the present embodiment. The present embodiment is basically the same as the first embodiment, but its difference (configuration and processing with regard to a 2D image group) will be described.

As illustrated in FIG. 11, the information acquisition apparatus 10 according to the present embodiment, for example, acquires the image information, distance information, and the like related to a 2D image (two-dimensional image) of a target object, and transmits the acquired image information, distance information, and the like to the information processing apparatus 20. As the 2D image of the target object, for example, two or more 2D image groups photographed to have an overlapping region are acquired. Note that the transmission of the image information may be realized by, for example, a radio access technology such as Wi-Fi (registered trademark).

The information processing apparatus 20 includes a 2D recognition unit (two-dimensional recognition unit) 25 and a 3D point cloud recognition integration unit (three-dimensional point cloud recognition integration unit) 26 instead of the 3D point cloud recognition unit 22 (see FIG. 2) according to the first embodiment. The 2D recognition unit 25 and the 3D point cloud recognition integration unit 26 function as the 3D point cloud recognition unit.

The 3D point cloud generation unit 21 generates a 3D point cloud from the 2D image group based on the 2D image group, the distance information, and the like obtained by the information acquisition apparatus 10. As a method of generating the 3D point cloud from the 2D image group, for example, structure from motion (SfM) and multi-view stereo (MVS) are used. The SfM generates low-density point cloud data restored from the feature point by triangulation. The MVS generates high-density point cloud data.

The 2D recognition unit 25 executes recognition processing on a plurality of 2D images and gives a recognition result for each picture element. For example, the 2D recognition unit 25 executes recognition processing of recognizing an attribute of the picture element for each picture element, and gives a label indicating the 2D recognition result (2D recognition label). The 2D recognition result is a recognition result of the picture element of the 2D image. Note that the recognition processing may be executed, for example, based on a learned model by a neural network (for example, CNN: convolutional neural network, or the like) that is an example of machine learning, or may be executed based on another method.

The 3D point cloud recognition integration unit 26 reflects the recognition result for each 2D image in the 3D point cloud. For example, the 3D point cloud recognition integration unit 26 integrates a plurality of 2D recognition results corresponding to a point of the 3D point cloud, and gives a label indicating a 3D recognition result (3D recognition label) to each point of the 3D point cloud. The 3D recognition result is a recognition result of the point of the 3D point cloud. Note that the integration is performed by majority decision, for example. Since the plurality of 2D recognition results are integrated into the recognition result of the 3D point cloud, the accuracy of the recognition result can be improved.

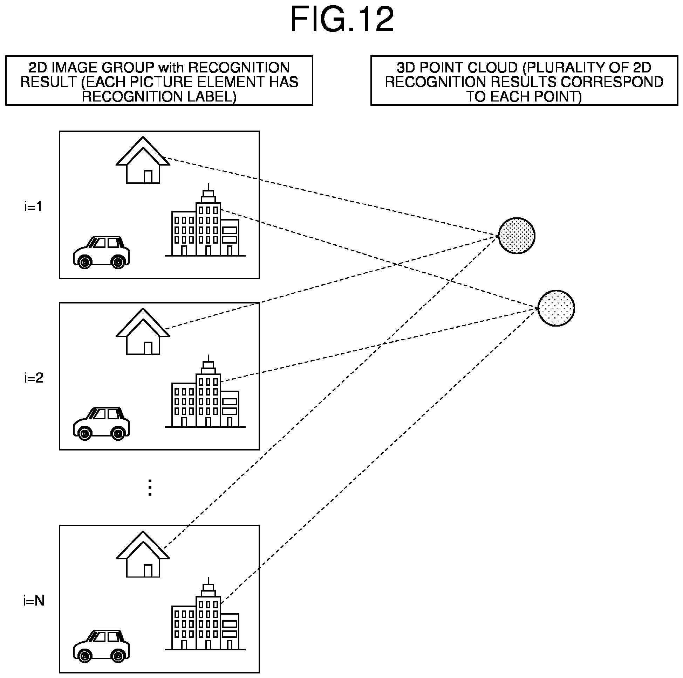

Here, FIG. 12 is a diagram for describing the integration of the plurality of 2D recognition results corresponding to the point of the 3D point cloud according to the present embodiment. As illustrated in FIG. 12, the 2D image groups each have the recognition result, that is, the 2D recognition label for each picture element, and the 3D point cloud has a plurality of 2D recognition labels corresponding to each point. In this case, for example, the 2D recognition label in the largest number for the attention point of the 3D point cloud is employed as the 3D recognition label. As an example, if the plurality of 2D recognition labels corresponding to the attention point are a building, a building, a building, and a car, the 3D recognition label for the attention point is a building.

Returning to FIG. 11, the 3D point cloud recognition confidence calculation unit 23 calculates the confidence of the recognition result for each point of the 3D point cloud, and gives the confidence for each point of the 3D point cloud. For example, the 3D point cloud recognition confidence calculation unit 23 calculates the confidence from the statistic of the plurality of 2D recognition results corresponding to the point (3D point) of the 3D point cloud. For example, assuming that the confidence is Conf, num_label_X is the number in which the 2D recognition result corresponding to the 3D point is X, and N is the number of 2D points (2D recognition results) corresponding to the 3D point, the confidence is obtained from Conf=num_label_X/N.

As in the first embodiment, the 3D point cloud extraction unit 24 extracts some point clouds from all the 3D point clouds based on the confidence of each point of the 3D point cloud obtained by the 3D point cloud recognition confidence calculation unit 23. For example, the 3D point cloud extraction unit 24 extracts a point cloud having a confidence in a predetermined range from the 3D point cloud based on the confidence of each point of the 3D point cloud.

Here, each block (the 3D point cloud generation unit 21, the 2D recognition unit 25, the 3D point cloud recognition integration unit 26, the 3D point cloud recognition confidence calculation unit 23, and the 3D point cloud extraction unit 24) constituting the information processing apparatus 20 described above is a functional block indicating a function of the information processing apparatus 20 as in the first embodiment. These functional blocks may be software blocks or hardware blocks. For example, each block may be one software module realized by software (microprograms) or one circuit block on a semiconductor chip (die). Of course, each block may be one processor or one integrated circuit. In addition, the information processing apparatus 20 may include a functional unit different from each of the above blocks. A configuration method of each block is arbitrary. In addition, a part or all of the operations of each block may be performed by another apparatus.

### <2-2. Example of information processing>

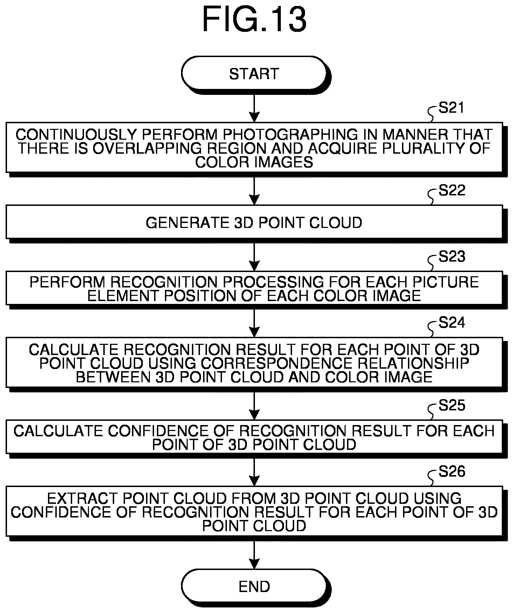

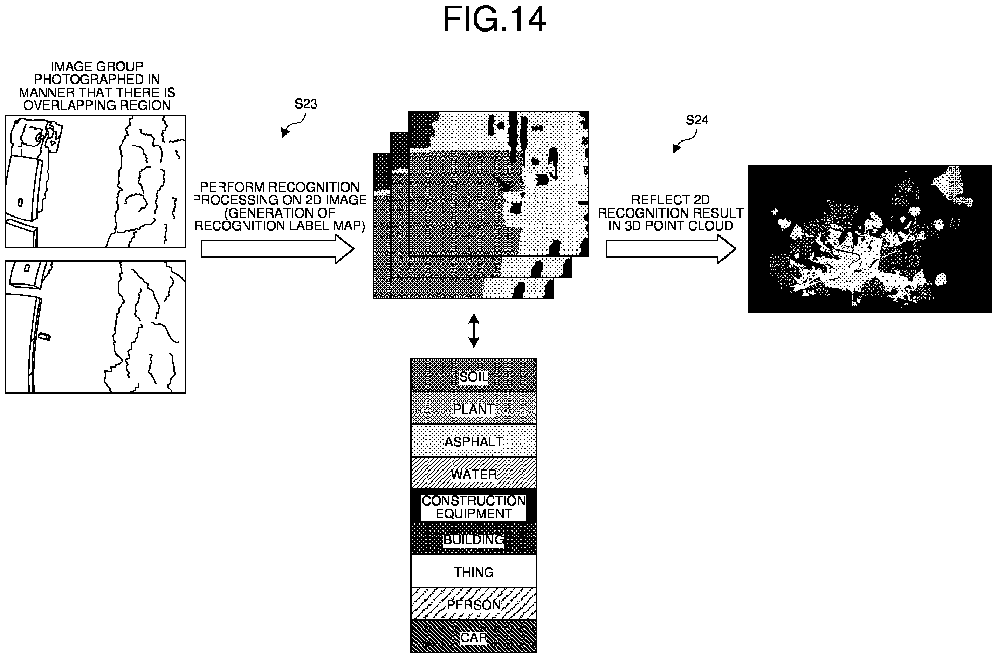

An example of the information processing according to the present embodiment will be described with reference to FIGS. 13 and 14. FIG. 13 is a flowchart illustrating an example of flow of the information processing according to the embodiment of the present embodiment. FIG. 14 is a diagram for describing recognition label giving for each 3D point cloud according to the present embodiment.

As illustrated in FIG. 13, in step S21, the information acquisition apparatus 10 continuously performs photographing in a manner that there is an overlapping region, and acquires a plurality of color images. In step S22, the 3D point cloud generation unit 21 generates a 3D point cloud based on each color image. In step S23, the 2D recognition unit 25 performs recognition processing for each picture element of each color image, and calculates a recognition result for each picture element of each color image. In step S24, the 3D point cloud recognition integration unit 26 calculates a recognition result for each point of the 3D point cloud using the correspondence relationship between the 3D point cloud and the color image. In step S25, the 3D point cloud recognition confidence calculation unit 23 calculates the confidence of the recognition result for each point of the 3D point cloud. In step S26, the 3D point cloud extraction unit 24 extracts a point cloud from the 3D point cloud using the confidence of the recognition result for each point of the 3D point cloud. For example, the 3D point cloud extraction unit 24 extracts a point cloud having a confidence in a predetermined range from the 3D point cloud.

As illustrated in FIG. 14, in step S23, recognition processing is executed on an image group photographed to have an overlapping region, that is, two or more 2D images. As a result, a recognition label map is generated. In the example of FIG. 14, the 2D recognition labels are "soil", "plant", "asphalt", "water", "construction equipment", "building", "thing", "person", and "car". In this case, the information acquisition apparatus 10 is mounted on a moving body such as a drone, an airplane, or a helicopter on which an aerial camera is mounted, for example. Next, in step S24, the 2D recognition results (for example, the 2D recognition labels) are reflected in the 3D point cloud. Note that, in the example of FIG. 14, there are various filled regions such as a black solid filled region and a dot filled region, and these different filled regions indicate that the recognition results are different.

### <2-3. Action and effect>

As described above, in the present embodiment, the effect according to the first embodiment can be obtained. That is, according to the second embodiment, the information processing apparatus 20 includes the 2D recognition unit 25 that executes recognition processing on the plurality of 2D images, and the 3D point cloud recognition integration unit 26 that reflects the recognition result for each 2D image in the 3D point cloud. As a result, by performing the recognition processing on the plurality of 2D images, reflecting the recognition result for each 2D image in the 3D point cloud, and giving the confidence for each point of the 3D point cloud, the processing cost can be suppressed as in the first embodiment.

In addition, when reflecting the recognition result for each 2D image in the 3D point cloud, the 3D point cloud recognition confidence calculation unit 23 may calculate the confidence for each point of the 3D point cloud from the statistic of the recognition result for each 2D image corresponding to the 3D point cloud. As a result, the confidence of each point of the 3D point cloud can be accurately obtained.

In addition, the 3D point cloud generation unit 21 may generate a 3D point cloud from the plurality of 2D images. As a result, the 3D point cloud can be obtained using the plurality of 2D images.

### <3. Specific example of a series of data formats of 3D point cloud>

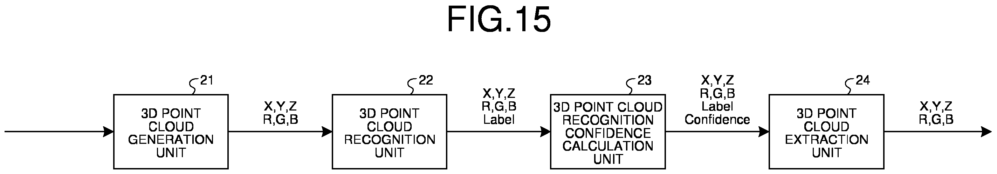

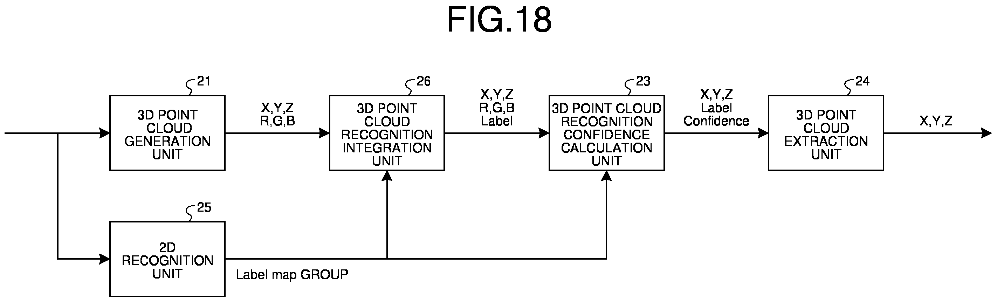

A specific example of a series of data formats of the 3D point cloud according to each embodiment will be described with reference to FIGS. 15 to 18. FIGS. 15 and 18 are diagrams for describing the specific example of the series of data formats of the 3D point cloud according to each embodiment.

As illustrated in FIG. 15, in a first specific example, the data output from the 3D point cloud generation unit 21 includes X, Y, Z, R, G, and B. XYZ represents position information in a three-dimensional coordinate system (three-dimensional position information), and RGB represents color information. The data output from the 3D point cloud recognition unit 22 includes X, Y, Z, R, G, B, and label. The label indicates a recognition label that is a recognition result. The data output from the 3D point cloud recognition confidence calculation unit 23 includes X, Y, Z, R, G, B, label, and confidence. The confidence indicates the confidence of the recognition result. The data output from the 3D point cloud extraction unit 24 includes X, Y, Z, R, G, and B. This data is data related to a point cloud having a confidence in a predetermined range.

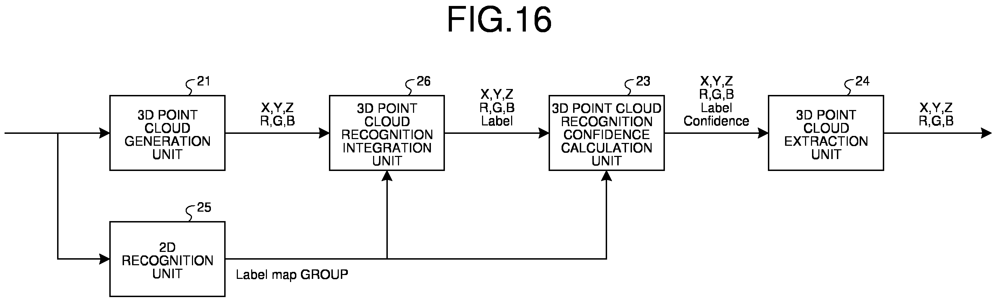

As illustrated in FIG. 16, in a second specific example, the data output from the 2D recognition unit 25 includes a label map group. The label map is a map indicating a label for each picture element. The data output from the 3D point cloud recognition integration unit 26 includes X, Y, Z, R, G, B, and label as in the 3D point cloud recognition confidence calculation unit 23 (see FIG. 15). Note that the data output from the other units is the same as that in FIG. 15.

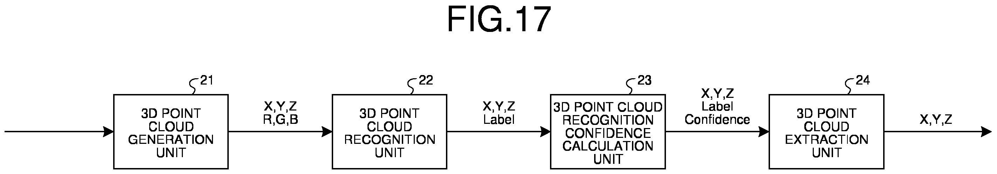

As illustrated in FIG. 17, in a third specific example, the data output from the 3D point cloud generation unit 21 includes X, Y, Z, R, G, and B. The data output from the 3D point cloud recognition unit 22 includes X, Y, Z, and label. The data output from the 3D point cloud recognition confidence calculation unit 23 does not include R, G, and B, unlike in FIG. 15, and includes X, Y, Z, label, and confidence. The data output from the 3D point cloud extraction unit 24 includes X, Y, and Z. This data is data related to a point cloud having a confidence in a predetermined range.

As illustrated in FIG. 18, in a fourth specific example, the data output from the 2D recognition unit 25 includes a label map group. The data output from the 3D point cloud recognition integration unit 26 includes X, Y, Z, R, G, B, and label as in the 3D point cloud recognition confidence calculation unit 23 (see FIG. 17). Note that the data output from the other units is the same as that in FIG. 17.

According to any one of the first to fourth specific examples, the 3D point cloud recognition confidence calculation unit 23 generates data including at least the position information for each point of the 3D point cloud, the recognition result (for example, the recognition label) for each point of the 3D point cloud, and the confidence of the recognition result for each point of the 3D point cloud. This data is used again by the 3D point cloud extraction unit 24 according to the change in the detection intensity, and thus is stored in the storage unit or the like.

### <4. Specific example of GUI>

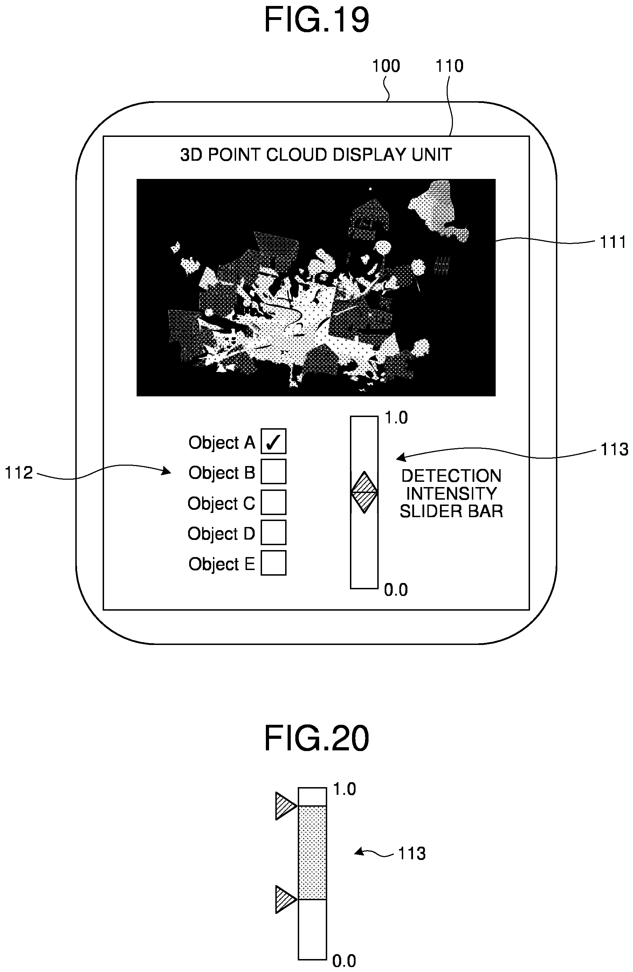

A specific example of a GUI (graphic user interface) according to each embodiment will be described with reference to FIGS. 19 and 20. FIGS. 19 and 20 are diagrams for describing a specific example of the GUI according to each embodiment.

As illustrated in FIG. 19, a user terminal 100 includes a display unit 110. The display unit 110 is, for example, a liquid crystal display or an organic electro luminescence (EL) display, and a touch panel is adopted as the display unit 110.

The display unit 110 includes a display region 111, an object GUI 112, and a detection intensity setting GUI 113. The display unit 110 displays the 3D point cloud in the display region 111 based on the point cloud information. The object GUI 112 includes a plurality of check boxes for selecting an object to be extracted. The user checks the check box and selects one or more objects. Examples of the object include soil, a plant, asphalt, water, construction equipment, a building, a thing, a person, a car, and the like. The detection intensity setting GUI 113 includes a slider bar that designates the detection intensity. The user slides the slider bar to set the detection intensity within a range of 0.0 to 1.0, for example.

The user operates the object GUI 112 and selects the object to be extracted, and operates the detection intensity setting GUI 113 to arbitrarily set the detection intensity. In response to this, for example, the user terminal 100 transmits information such as the object to be extracted and detection intensity to the information processing apparatus 20 via the server apparatus 30. The 3D point cloud extraction unit 24 receives the transmitted information such as the object to be extracted and the detection intensity, extracts a point cloud having a confidence equal to or higher than the detection intensity (point cloud having a confidence in a predetermined range) for the recognition label corresponding to the object to be extracted, and transmits the point cloud information related to the extracted point cloud to the user terminal 100 via the server apparatus 30. After that, the display unit 110 displays the 3D point cloud in the display region 111 based on the transmitted point cloud information. In this way, the point cloud extracted according to the selection of the object to be extracted and the setting of the detection intensity is displayed. For example, when all the objects are selected and the detection intensity is set to 0.0, all the point clouds are displayed.

Note that the detection intensity setting GUI 113 may include a slider bar that designates a range of the detection intensity (range of the object to be extracted), for example, as illustrated in FIG. 20, instead of (or in addition to) the slider bar that designates the detection intensity.

### <5. Another configuration example of information processing apparatus>

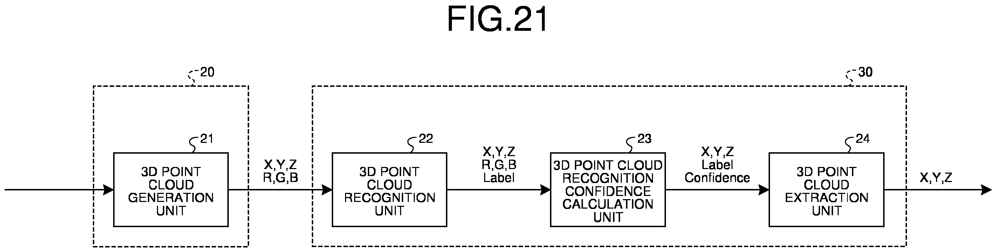

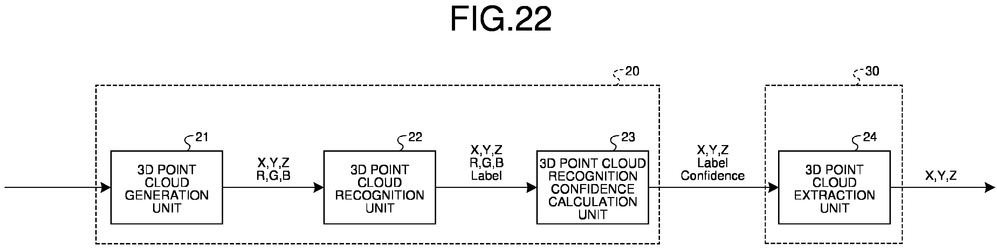

Another configuration example of the information processing apparatus 20 according to each embodiment above will be described with reference to FIGS. 21 and 22. FIGS. 21 and 22 are diagrams illustrating an example of a schematic configuration of a modification of the information processing apparatus 20 according to each embodiment.

As illustrated in FIG. 21, the information processing apparatus 20 may include the 3D point cloud generation unit 21, and the server apparatus 30 may include the 3D point cloud recognition unit 22, the 3D point cloud recognition confidence calculation unit 23, and the 3D point cloud extraction unit 24. According to such a configuration, the amount of data to be transferred by the information processing apparatus 20 is six (X, Y, Z, R, G, and B) pieces per point of the 3D point cloud. The advantage is that heavy recognition processing can be performed on the side of the server apparatus 30 (for example, a cloud server) with abundant calculation resources.

As illustrated in FIG. 22, the information processing apparatus 20 may include the 3D point cloud generation unit 21, the 3D point cloud recognition unit 22, the 3D point cloud recognition confidence calculation unit 23, and the server apparatus 30 may include and the 3D point cloud extraction unit 24. According to such a configuration, the amount of data to be transferred by the information processing apparatus 20 is five (X, Y, Z, label, and confidence) pieces per point of the 3D point cloud. The advantage is that it is not necessary to transmit the color information to the server apparatus 30 (for example, a cloud server) side.

### <6. Other embodiments>

The processing according to the above embodiment (or modification) may be performed in various different modes (modifications) other than the above embodiments. For example, among the processings described in the above embodiments, all or a part of the processings described as being automatically performed can be manually performed, or all or a part of the processings described as being manually performed can be automatically performed by a known method. In addition, the processing procedure, specific name, and information including various data and parameters illustrated in the above document and the drawings can be arbitrarily changed unless otherwise specified. For example, the various types of information illustrated in each figure are not limited to the illustrated information.

In addition, each component of each apparatus illustrated in the drawings is functionally conceptual, and is not necessarily physically configured as illustrated in the drawings. That is, a specific form of distribution and integration of each apparatus is not limited to the illustrated form, and all or a part of it can be functionally or physically distributed and integrated in an arbitrary unit according to various loads, usage conditions, and the like.

In addition, the above embodiments (or modifications) can be appropriately combined within a range that does not contradict processing contents. In addition, the effects described in the present specification are merely examples and are not limited, and other effects may be provided.

### <7. Configuration example of hardware>

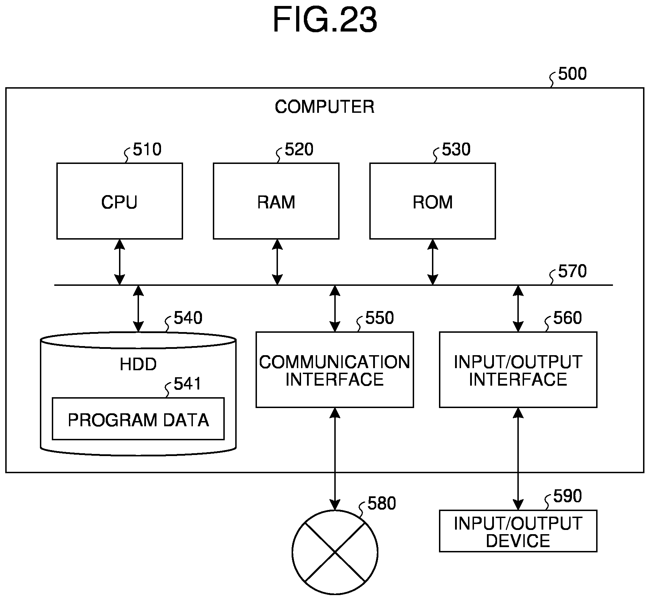

A specific hardware configuration example of the information device such as the information processing apparatus 20, the server apparatus 30, and the application execution apparatus 40 according to the above embodiment (or modification) will be described. The information device such as the information processing apparatus 20, the server apparatus 30, and the application execution apparatus 40 according to the embodiment (or the modification) may be realized by, for example, a computer 500 having a configuration as illustrated in Fig. 23. Fig. 23 is a diagram illustrating an example of a schematic configuration of hardware that realizes functions of the information device.

As illustrated in Fig. 23, the computer 500 includes a CPU 510, a RAM 520, a read only memory (ROM) 530, a hard disk drive (HDD) 540, a communication interface 550, and an input/output interface 560. Each unit of the computer 500 is connected by a bus 570.

The CPU 510 operates based on the program stored in the ROM 530 or the HDD 540, and controls each unit. For example, the CPU 510 develops a program stored in the ROM 530 or the HDD 540 in the RAM 520, and executes processing corresponding to various programs.

The ROM 530 stores a boot program such as a basic input output system (BIOS) executed by the CPU 510 when the computer 500 is activated, a program depending on hardware of the computer 500, and the like.

The HDD 540 is a recording medium that can be read by the computer 500 and performs non-transient recording of a program executed by the CPU 510, data used by such a program, and the like. Specifically, the HDD 540 is a recording medium that records an information processing program according to the present disclosure as an example of program data 541.

The communication interface 550 is an interface for the computer 500 to connect to an external network 580 (for example, the Internet). For example, the CPU 510 receives data from another device or transmits data generated by the CPU 510 to another device via the communication interface 550.

The input/output interface 560 is an interface for connecting an input/output device 590 and the computer 500. For example, the CPU 510 receives data from an input device such as a keyboard or a mouse via the input/output interface 560. In addition, the CPU 510 transmits data to an output device such as a display, a speaker, or a printer via the input/output interface 560.

Note that, in addition, the input/output interface 560 may function as a media interface that reads a program and the like recorded in a predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, and the like.

Here, for example, in a case where the computer 500 functions as an information device such as the information processing apparatus 20, the server apparatus 30, or the application execution apparatus 40 according to each embodiment (or modification), the CPU 510 of the computer 500 executes the information processing program loaded on the RAM 520 to realize all or a part of the functions of the respective units such as the information processing apparatus 20, the server apparatus 30, or the application execution apparatus 40 according to each embodiment (or modification). In addition, the HDD 540 stores information processing programs and data according to each embodiment. Note that the CPU 510 reads the program data 541 from the HDD 540 and executes the program data, but as another example, these programs may be acquired from another apparatus via the external network 580.

### <8. Appendix>

Note that the present technology can also have the following configurations.
(1) An information processing apparatus comprising:
   a three-dimensional point cloud recognition unit that executes recognition processing on a three-dimensional point cloud and gives a recognition result for each point of the three-dimensional point cloud; and
   a recognition confidence calculation unit that calculates a confidence of the recognition result for each point of the three-dimensional point cloud and gives the confidence for each point of the three-dimensional point cloud.
(2) The information processing apparatus according to (1), wherein
   the recognition confidence calculation unit calculates the confidence for each point of the three-dimensional point cloud from a statistic of a local region of a three-dimensional space for the recognition result for each point of the three-dimensional point cloud.
(3) The information processing apparatus according to (2), wherein
   the recognition confidence calculation unit calculates the statistic of the local region based on a positional relationship for each point in the local region of the three-dimensional point cloud.
(4) The information processing apparatus according to (2) or (3), wherein
   the recognition confidence calculation unit calculates the statistic of the local region based on a similarity of a color for each point in the local region of the three-dimensional point cloud.
(5) The information processing apparatus according to any one of (1) to (4), wherein
   the three-dimensional point cloud recognition unit includes:
   a two-dimensional recognition unit that executes recognition processing on a plurality of two-dimensional images; and
   a three-dimensional point cloud recognition integration unit that reflects a recognition result for each of the two-dimensional images in the three-dimensional point cloud.
(6) The information processing apparatus according to (5), wherein,
   when reflecting the recognition result for each of the two-dimensional images in the three-dimensional point cloud, the recognition confidence calculation unit calculates the confidence for each point of the three-dimensional point cloud from a statistic of the recognition result for each of the two-dimensional images corresponding to the three-dimensional point cloud.
(7) The information processing apparatus according to any one of (1) to (6), further comprising
   a three-dimensional point cloud extraction unit that extracts a point cloud from the three-dimensional point cloud based on the confidence of each point of the three-dimensional point cloud.
(8) The information processing apparatus according to (7), wherein
   the three-dimensional point cloud extraction unit extracts the point cloud having the confidence in a predetermined range from the three-dimensional point cloud based on the confidence of each point of the three-dimensional point cloud.
(9) The information processing apparatus according to (7) or (8), wherein
   the three-dimensional point cloud extraction unit stores the confidence for each point of the three-dimensional point cloud and extracts the point cloud from the three-dimensional point cloud based on the stored confidence for each point of the three-dimensional point cloud.
(10) The information processing apparatus according to any one of (1) to (9), further comprising
   a three-dimensional point cloud generation unit that generates the three-dimensional point cloud.
(11) The information processing apparatus according to (10), wherein
   the three-dimensional point cloud generation unit generates the three-dimensional point cloud from three-dimensional distance information.
(12) The information processing apparatus according to (10), wherein
   the three-dimensional point cloud generation unit generates the three-dimensional point cloud from a plurality of two-dimensional images.
(13) An information processing method comprising:
   executing recognition processing on a three-dimensional point cloud and giving a recognition result for each point of the three-dimensional point cloud; and
   calculating a confidence of the recognition result for each point of the three-dimensional point cloud and giving the confidence for each point of the three-dimensional point cloud.
(14) An information generation method comprising:
   generating information including
   position information for each point of a three-dimensional point cloud,
   a recognition result for each point of the three-dimensional point cloud, and
   a confidence of the recognition result for each point of the three-dimensional point cloud.
(15) An information processing system including the information processing apparatus according to any one of (1) to (12).
(16) An information processing method using the information processing apparatus according to any one of (1) to (12).
(17) An information generation method using the information processing apparatus according to any one of (1) to (12).

### Reference Signs List

- 1: INFORMATION PROCESSING SYSTEM

- 10: INFORMATION ACQUISITION APPARATUS
- 20: INFORMATION PROCESSING APPARATUS
- 21: 3D POINT CLOUD GENERATION UNIT
- 22: 3D POINT CLOUD RECOGNITION UNIT
- 23: 3D POINT CLOUD RECOGNITION CONFIDENCE CALCULATION UNIT
- 24: 3D POINT CLOUD EXTRACTION UNIT
- 25: 2D RECOGNITION UNIT
- 26: 3D POINT CLOUD RECOGNITION INTEGRATION UNIT
- 30: SERVER APPARATUS
- 40: APPLICATION EXECUTION APPARATUS
- 50: INFORMATION PROCESSING APPARATUS
- 51: 3D POINT CLOUD GENERATION UNIT
- 52: 3D POINT CLOUD RECOGNITION UNIT
- 53: 3D POINT CLOUD EXTRACTION UNIT
- 100: USER TERMINAL
- 110: DISPLAY UNIT
- 111: DISPLAY REGION
- 112: OBJECT GUI
- 113: DETECTION INTENSITY SETTING GUI
- 500: COMPUTER
- R1: ATTENTION POINT
- R2: SPHERICAL REGION

## Claims

1. An information processing apparatus comprising:
a three-dimensional point cloud recognition unit that executes recognition processing on a three-dimensional point cloud and gives a recognition result for each point of the three-dimensional point cloud; and
a recognition confidence calculation unit that calculates a confidence of the recognition result for each point of the three-dimensional point cloud and gives the confidence for each point of the three-dimensional point cloud.

2. The information processing apparatus according to claim 1, wherein
the recognition confidence calculation unit calculates the confidence for each point of the three-dimensional point cloud from a statistic of a local region of a three-dimensional space for the recognition result for each point of the three-dimensional point cloud.

3. The information processing apparatus according to claim 2, wherein
the recognition confidence calculation unit calculates the statistic of the local region based on a positional relationship for each point in the local region of the three-dimensional point cloud.

4. The information processing apparatus according to claim 2, wherein
the recognition confidence calculation unit calculates the statistic of the local region based on a similarity of a color for each point in the local region of the three-dimensional point cloud.

5. The information processing apparatus according to claim 1, wherein
the three-dimensional point cloud recognition unit includes:
a two-dimensional recognition unit that executes recognition processing on a plurality of two-dimensional images; and
a three-dimensional point cloud recognition integration unit that reflects a recognition result for each of the two-dimensional images in the three-dimensional point cloud.

6. The information processing apparatus according to claim 5, wherein,
when reflecting the recognition result for each of the two-dimensional images in the three-dimensional point cloud, the recognition confidence calculation unit calculates the confidence for each point of the three-dimensional point cloud from a statistic of the recognition result for each of the two-dimensional images corresponding to the three-dimensional point cloud.

7. The information processing apparatus according to claim 1, further comprising
a three-dimensional point cloud extraction unit that extracts a point cloud from the three-dimensional point cloud based on the confidence of each point of the three-dimensional point cloud.

8. The information processing apparatus according to claim 7, wherein
the three-dimensional point cloud extraction unit extracts the point cloud having the confidence in a predetermined range from the three-dimensional point cloud based on the confidence of each point of the three-dimensional point cloud.

9. The information processing apparatus according to claim 7, wherein
the three-dimensional point cloud extraction unit stores the confidence for each point of the three-dimensional point cloud and extracts the point cloud from the three-dimensional point cloud based on the stored confidence for each point of the three-dimensional point cloud.

10. The information processing apparatus according to claim 1, further comprising
a three-dimensional point cloud generation unit that generates the three-dimensional point cloud.

11. The information processing apparatus according to claim 10, wherein
the three-dimensional point cloud generation unit generates the three-dimensional point cloud from three-dimensional distance information.

12. The information processing apparatus according to claim 10, wherein
the three-dimensional point cloud generation unit generates the three-dimensional point cloud from a plurality of two-dimensional images.

13. An information processing method comprising:
executing recognition processing on a three-dimensional point cloud and giving a recognition result for each point of the three-dimensional point cloud; and
calculating a confidence of the recognition result for each point of the three-dimensional point cloud and giving the confidence for each point of the three-dimensional point cloud.

14. An information generation method comprising:
generating information including
position information for each point of a three-dimensional point cloud,
a recognition result for each point of the three-dimensional point cloud, and
a confidence of the recognition result for each point of the three-dimensional point cloud.
